# EUROPÄISCHE PATENTANMELDUNG

(11) **EP 4 260 713 A1**
(43) Veröffentlichungstag der Anmeldung: **18.10.2023**
(21) Anmeldenummer: 23000060.6
(22) Anmeldetag: 11.04.2023
(51) Int. Cl.: A23L 15/00, A23L 11/00, A23L 29/20, A23J 3/00, A23J 3/14

(54) **VERFAHREN ZUR HERSTELLUNG EINES VEGANEN FLÜSSIGEI-ERSATZPRODUKTS**

(30) Priorität: 17.04.2022 DE 102022001337
(71) Anmelder: Briem, Fritz, 85452 Moosinning (DE)
(72) Erfinder: Briern, Fritz, 85452 Moosinning (DE); Seiss, Frank Stefan, 14532 Kleinmachnow (DE)
(74) Vertreter: Müller, Bernhard

(57) **Zusammenfassung**

Es wird ein Verfahren zum Herstellen eines veganen Flüssigei-Ersatzprodukts bereitgestellt. Bei dem Verfahren werden ein Mehl von stark proteinhaltigen Pflanzensamen und/oder ein Pulver mit einem Gehalt an Proteinisolaten derartiger Pflanzensamen-einer Vernetzungsbehandlung unter Erwärmung unterzogen. Anschließend wird das erhaltene Produkt auf eine Temperatur unter 50 ° C abgekühlt und mit einem Verdickungsmittel versetzt.

## Beschreibung

Die Erfindung betrifft ein Verfahren zur Herstellung eines Flüssigei-Ersatzprodukts ohne tierische Inhaltsstoffe mit der Funktionalität entsprechender Produkte tierischen Ursprungs.

Die Versorgung der Menschen mit hochwertigen Nahrungsmitteln ist geprägt durch einen hohen Resourcenverbrauch, so dass bei der Produktion von Nahrungsmitteln, insbesondere von tierischen Produkten, die Nachhaltigkeit nicht gewährleistet ist.

Andererseits ist der menschliche Organismus auf Nahrungsmittel angewiesen, die eine hohe Dichte an Nährstoffen, insbesondere an Proteinen und Mineralstoffen, bei hoher Bioverfügbarkeit aufweisen.

Hühnereier sind ein wichtiger Bestandteil bei der Zubereitung von Speisen und bei der Herstellung von Nahrungsmitteln für die menschliche Ernährung. Dabei wird aus praktischen Gründen häufig auf Flüssigei zurückgegriffen, bei dem aber die vorerwähnte Problematik bezüglich der Nachhaltigkeit gegeben ist.

Demzufolge ist es wünschenswert, tierisches Flüssigei als Lebensmittel mit einem spezifischen Geschmackserlebnis oder dessen speziellen Funktionalitäten durch ein pflanzliches Produkt zu ersetzen. In der Praxis wird zum Beispiel die Verwendung eines Gemisches aus Süßlupinenpulver und Wasser als Ersatz für Hühnerei empfohlen (vergl. z.B. Rezepte mit Lupinenmehl - SOBO Naturkost (sobo-naturkost.de). Dieses Gemisch erweist sich jedoch nicht als zufriedenstellend, da es bei Verarbeitung durch Braten oder Backen oder bei der Herstellung von Teigwaren nicht zu Ergebnissen führt, die mit Ergebnissen bei der Verwendung von tierischem Ei vergleichbar sind.

Aus US 2020/0352195 A1 ist ein Verfahren zur Herstellung eines flüssigen, veganen Ei-Ersatzprodukts bekannt, bei dem Mungbohnen-Proteinisolat, Wasser, Speiseöl, Emulgator und ein Verdickungsmittel zusammen mit dem Enzym Transglutaminase vermischt, 10 bis 20 Minuten auf 50-55 °C erwärmt und anschließend pasteurisiert werden. Nachteilig daran ist, dass die Herstellung eines Proteinisolats mit hohem Energieaufwand verbunden ist, was sich nachteilig auf den sogenannten ökologischen Fußabdruck auswirkt. Ferner besteht beim Erhitzen des Verdickungsmittels auf höhere Temperaturen die Gefahr, dass eine starke Einbindung von Wasser stattfindet, wodurch die Viskosität des Gemisches erhöht wird, was sich insbesondere bei großtechnischer Anwendung negativ auf die Pumpfähigkeit des Produkts auswirkt.

Aufgabe der Erfindung ist es daher, ein pflanzliches Flüssigei-Ersatzprodukt bereitzustellen, das bei der Verarbeitung sich möglichst ähnlich wie tierisches Ei verhält und ähnliche sensorische Eigenschaften aufweist. Ferner sollen leicht zugängliche und wenig technisch aufbereitete Ausgangsprodukte verwendet werden und die Verfahrensbedingungen so ausgestaltet sein, dass in sämtlichen Verfahrensstufen eine leichte Handhabbarkeit und insbesondere eine gute Pumpfähigkeit gewährleistet ist.

Bei Untersuchungen, die zur vorliegenden Erfindung führten, wurde festgestellt, dass es zur Lösung der vorgenannten Aufgabe besonders wichtig ist, für eine Vernetzung und Stabilisierung der eingesetzten pflanzlichen Proteine und/oder Kohlenhydrate zu sorgen.

Der Gegenstand der Erfindung ist in den Patentansprüchen definiert.

Zur Durchführung des Verfahrens wird ein Reaktionsbehälter verwendet, dessen Volumen so gewählt wird, dass er die benötigte Proteinquelle in einer Suspension in einem Mischungsverhältnis von 1/4 bis 1/20 und vorzugsweise von 1/6 bis 1/8 mit einer Flüssigkeit aufnehmen kann.

Der Behälter ist so ausgelegt, dass eine gute Durchmischung in besonderen Fällen auch Homogenisierung der Suspension gewährleistet wird. Hierzu können Rührwerke, bevorzugt aber Rührwerke mit einstellbarer Scherkraft, zum Einsatz kommen. Ein besonderes Merkmal des Reaktionsbehälters besteht darin, dass während des Rührens und Homogenisierens gleichzeitig die Suspension aufgeheizt und die Temperatur gehalten werden kann. Vorzugsweise kann beim Reaktionsbehälter dafür gesorgt werden, dass nur ein begrenzter Luftzutritt erfolgt, um unerwünschte Oxidationsvorgänge zu vermeiden. Es kann auch unter Schutzgasatmosphäre gearbeitet werden.

Als Mehle von natürlich stark proteinhaltigen Pflanzensamen kommen beispielsweise Mahlerzeugnisse aus Lupinensamen, Sojabohnen, Kichererbsen und anderen Hülsenfrüchten in Frage. Auch Mehle aus Cerealienkeimlingen können zur Anwendung kommen.

Prinzipiell ist auch ein Zusatz oder die alleinige Verwendung von Pulvern mit einem Gehalt an Proteinisolaten aus derartigen Pflanzensamen möglich

Die Pflanzenmehle haben jedoch gegenüber Proteinisolaten den Vorteil, dass sie wesentlich einfacher zugänglich sind und zu ihrer Herstellung kein hoher Energieaufwand erforderlich ist.

Vorzugsweise werden die Pflanzenmehle vor einem eventuellen Enzymzusatz höheren Temperaturen ausgesetzt, um eine mögliche mikrobiologische Belastung zu verringern. Bei der Verringerung der mikrobiellen Bakterienlast ist insbesondere die Aktivierungstemperatur (60 - 80 °C) relevanter Sporenbildner zu beachten. In Verbindung mit entsprechenden anschließenden Enzymrasten (1 - 5 h) kann eine Auskeimung der aktivierten Sporen erfolgen, was die thermische Inaktivierung der Schadorganismen im Anschluss erheblich beeinflusst. Da die Pflanzenmehle neben der reinen Proteinfraktion noch signifikante Mengen an Kohlenhydraten enthalten, die in Form von Amylopectin sehr stark Wasser binden können, ist zu berücksichtigen, dass diese Kohlenhydrate bezüglich der Wasseraufnahme im Wettbewerb mit dem später zugegebenen Verdickungsmittel stehen und eine individuell unterschiedliche Verkleisterungstemperatur, die die spätere Funktionalität des Endproduktes signifikant beeinflusst, aufweisen können.

Die Flüssigkeit ist so zu wählen bzw. so mit geeigneten Stoffen einzustellen, dass diese eine möglichst hohe Löslichkeit der zu lösenden Bestandteile garantiert und/oder Umsetzungsprozesse fördert, die wiederum das Löslichkeitsverhalten und/oder die Funktionalität der zu gewinnenden Inhaltsstoffe beeinflussen können. Bevorzugt kommt hier Wasser mit einem pH-Wert von 3 bis 10 und einer Temperatur von 30 bis 120 °C zum Einsatz. Bevorzugt werden ein pH-Wert von 5 bis 7 und eine Temperatur von 40 bis 60 °C.

Die Endtemperatur ist so zu wählen, dass eine entsprechende Produktstabilität in Bezug auf die funktionellen Eigenschaften und die mikrobiologische Haltbarkeit gewährleistet ist.

Die Umsetzung erfolgt vorzugsweise bei einem pH-Wert von 5,5 bis 6,5. Zur Aufrechterhaltung dieses pH-Bereichs wird das Gemisch vorzugsweise mit einem Puffer, wie Natriumcitrat, versetzt.

Vorzugsweise wird das Reaktionsgemisch auch mit einer Kohlenhydratquelle, insbesondere Stärke, versetzt, was dazu dient, für eine kompakte Beschaffenheit des Endprodukts zu sorgen bzw. durch eine Verkleisterung der Stärke die Wasserhaltigkeit des Endproduktes zu beeinflussen. Das Gewichtsverhältnis von eiweißhaltigem Produkt zur Stärke beträgt etwa 1:0,2 bis 1:1 vorzugsweise 1:0,3 bis 1:0,8.

Vorzugsweise wird das Reaktionsgemisch mit einem pflanzlichen Öl, z. B. Leinöl, Sonnenblumenöl, Hanföl und dergl., versetzt. Der Ölzusatz bewirkt eine Angleichung des Fettgehalts an den von Hühnerei und hat außerdem einen positiven Einfluss auf die Konsistenz des Produkts. Die Ölmenge wird so gewählt, dass im Endprodukt der Fettanteil etwa 2-7 % und vorzugsweise 3-5% beträgt.

Vorteilhaft ist auch der Zusatz von Backhefe. Dadurch werden physiologisch wertvolle Bestandteile in das Produkt eingebracht und spezielle geschmackliche Nuancen erzielt. Außerdem hat man durch Verwendung spezieller Hefen die Möglichkeit, Bestandteile zuzuführen, an denen erfahrungsgemäß bei sich vegan ernährenden Personen ein Mangel herrscht. Dies gilt beispielsweise für Zink, Selen und Vitamin B12. Der Hefeanteil kann beispielsweise 0,5 bis 2 %, bezogen auf das Gewicht des proteinhaltigen Materials, betragen. Außerdem kommt der Hefe eine geschmacksverstärkende Wirkung zu.

Die in Stufe d) erfolgende Zugabe eines Verdickungsmittels dient dem Zweck, für die gewünschte Viskosität des Produkts zu sorgen und bei der Weiterverarbeitung des Produkts durch Kochen oder Braten austretendes Wasser zu binden. Beispiele für geeignete Verdickungsmittel sind Pflanzengummen auf der Basis von Polysacchariden, z.B. Xanthan, Johannisbrotkernmehl, Gellan und dergleichen.

Als Enzym zur Durchführung der Vernetzung in Stufe b) wird vorzugsweise eine Transglutaminase verwendet. Es müssen keine hochgereinigten Enzyme eingesetzt werden. Ausschlaggebend ist, dass die Enzymaktivität so hoch ist, dass innerhalb vertretbarer Zeitspannen die gewünschte Proteinvernetzung erreicht wird.

Vorteilhaft ist es, das Verdickungsmittel vorher kurzzeitig auf Temperaturen über 70 °C zu erhitzen, um eine mögliche Keimbelastung durch das Verdickungsmittel zu verhindern. Auch das fertige Produkt kann kurzzeitig erhitzt werden, z.B. 1 Minute auf 72 °C, um die Keimbelastung zu verringern. Bei einer so kurzen Behandlungszeit wird die Funktionsfähigkeit des Verdickungsmittels nicht beeinträchtigt.

Das enzymhaltige Gemisch wird vorzugsweise auf 30-55 °C, insbesondere auf 35-50 °C und ganz besonders auf 40-48 °C erwärmt. Diese Temperatur wird mehrere Stunden, z.B. 3-10 Stunden, vorzugsweise 4-8 Stunden, gehalten, um eine ausreichende Proteinvernetzung zu erreichen. Hierbei kommen Enzymaktivitäten von 50 - 150 U/g insbesondere von 80 - 100 U/g zur Anwendung.

Im Anschluss daran wird für eine Inaktivierung des Enzyms gesorgt. Hierzu wird das Gemisch auf 55-82 °C, vorzugsweise auf 60-72 °C und insbesondere auf 65 °C erwärmt. Höhere Temperaturen sind zu vermeiden, da dadurch die angestrebte Vernetzung durch verstärkte Denaturierungsvorgänge verloren geht und/oder eine Verkleisterung der durch den Rohstoff eingebrachten Stärkefraktion stattfindet. Die Inaktivierung erfolgt relativ rasch, so dass Erhitzungszeiten von 5-30 Minuten und vorzugsweis von 20-25 Minuten ausreichen.

Bei Durchführung der Vernetzung gemäß Stufe b) durch Erwärmen des Produkts wird vorzugsweise eine Temperatur von 80-90°C für eine Zeitspanne von 10-30 Minuten eingehalten. Dies bewirkt eine Einlagerung von Wassermolekülen in das durch die Rohstoffe, insbesondere durch die Pflanzensamenmehle, eingebrachte Amylopektin. Hierbei ist darauf zu achten, dass im Anschluss keine thermische oder enzymatische Freisetzung des gebundenen Wassers erfolgt.

Die in Stufe d) erfolgende Zugabe eines Verdickungsmittel erfolgt erst nach Abkühlung des Gemisches auf eine Temperatur unter 50 °C, um zu vermeiden, dass die Funktionsfähigkeit des Verdickungsmittel durch zu hohe Temperaturen beeinträchtigt wird.

Durch dieses Verfahren können Produkte bereitgestellt werden, die die Erwartungshaltung des Verbrauchers bezüglich der Funktionalität eines tierischen Lebensmittels, insbesondere eines Flüssigeis, erfüllen.

Ein besonderes Merkmal ist, dass durch eine Variation der Prozessparameter im Reaktionsbehälter das Lösungsverhalten und/oder die die Konzentration funktioneller Inhaltsstoffe der Suspension gesteuert werden kann. Hierbei ist vor allem die Extraktion und die Bildung von ernährungsphysiologisch relevanten Inhaltsstoffen in hoher Bioverfügbarkeit und die Bildung und/oder Modifikation funktioneller Inhaltsstoffe zum Erreichen des erwarteten Anwendungsergebnisses, insbesondere des Kochergebnisses, zu nennen.

Das erfindungsgemäß hergestellte Produkt kann als Zutat (Volleiersatz) zur Herstellung von Eiernudeln, Spätzle oder bei Backwaren eingesetzt werden.

Alternativ kann das flüssige Produkt direkt zur Bereitung von Rührei oder Omelette eingesetzt werden.

Weitere Anwendungsmöglichkeiten findet das Produkt als pflanzlicher Ersatz tierischer Proteine bei vegetarischen Lebensmitteln.

Nachstehend wird die Erfindung durch Ausführungsbeispiele erläutert.

### Beispiel 1 (Vernetzung durch Enzymzusatz)

200 kg Gerstenmalzkeimlinge (gemahlen) werden in 1000 Liter Wasser mit einer Gesamthärte von 10 Grad deutscher Härte bei 45 °C in einem Mischer mit hoher Scherkraft (high shear force mixer) gemischt. Das Gemisch wird sodann auf 80 °C im Durchlauferhitzer erhitzt und sofort wieder auf 55 °C abgekühlt. Nach 5 minütigem Rühren werden 10 kg Natriumcitrat, 1,5 kg Citronensäure, 3 kg TransGlutaminase, 1,5 kg Backhefe und 40 Liter Leinöl unter ständigem Rühren zugegeben. Die Temperatur wird 55 °C dann 6 Stunden gehalten. Im Anschluss wird das Gemisch erneut auf 80 °C erwärmt und im Durchlauferhitzer sofort auf 40 °C gekühlt. Der Rührer wird so eingestellt, dass möglichst wenig Luft eingezogen wird. Nach 6 Stunden werden 1, 5 kg Xanthan vorsichtig eingerührt und die Temperatur für 1 min im Durchlauferhitzer auf 72 °C erhöht. Anschließend wird das Gemisch auf 4 °C abgekühlt.

### Beispiel 2 (Vernetzung durch Temperaturbehandung)

150 g Lupinenmehl, 0,5 g Natriumcitrat, 100 g Reisstärke und 40 ml Leinöl werden mit einem Mixer in 1 Liter Wasser bei 35 °C vermischt. Die Temperatur wird nach 1 h auf 85 °C erhöht und unter ständigem Rühren 20 Minuten gehalten. Anschließend wird die Mischung auf 45 °C abgekühlt und 0,3 g Xanthan werden unter ständigem Rühren zugegeben. Die entstandene Mischung ist von hellgelber Farbe und weist einen neutralen Geruch auf. Die Viskosität des Produktes erlaubt noch gute Dosierbarkeit. Nachstehend ist die nährstoffrelevante Zusammensetzung, bezogen auf 100 g, angegeben.:

| | |
|---|---|
| Kohlenhydrate: | 11 g |
| Eiweiß: | 6 g |
| Fett: | 4 g |
| Ballaststoffe: | 5 g |

### Beispiel 3 (Vernetzung durch Temperaturbehandung)

70 g Bohnenisolat, 1g Natriumcitrat, 100 g Klebereismehl, 1 g falscher Safran, 0,5 g Hefe und 30 ml Rapsöl werden mit einem Mixer in 1 Liter Wasser bei 60 °C vermischt: Anschließend wird die Temperatur auf 88 °C erhöht und 10 min. bei moderatem Rühren gehalten. Anschließend wird die hochviskose Flüssigkeit auf 40 °C abgekühlt und sodann mit 1 g Gellan versetzt.

### Zusammensetzung (pro 100g):

| | |
|---|---|
| Kohlenhydrate: | 9 g |
| Eiweiß: | 7 g |
| Fett: | 4 g |
| Zink: | 3 mg |

### Beispiel 4 (Vernetzung durch Enzymzusatz)

150 kg Malzkeimmehl und 20 kg Lupinenisolat werden mit 1000 Liter Wasser, in dem 10 kg Natriumcitrat und 2 kg Citronensäure gelöst sind, in einem Homogenisator gemischt und anschließend in einem Kurzzeiterhitzer auf 78 °C erhitzt, so dass 200 Pasteurisationseinheiten auf das Gemisch einwirken. Anschließend wird das Homogenisat auf 40 °C abgekühlt und 4 kg Transglutaminase werden zugegeben. Die Temperatur wird im Anschluss 2 Stunden bei 40 °C gehalten und dann wird die Enzymaktivität durch Erhitzen auf 78 °C gestoppt. Anschließend wird das Gemisch auf 45 °C abgekühlt. In das gekühlte Gemisch werden 30 Liter Leinöl, in dem 3 kg Xanthan bei 85 °C gelöst worden sind, eingerührt und homogen vermischt.

## Patentansprüche

1. Verfahren zum Herstellen eines veganen Flüssigei-Ersatzprodukts, **gekennzeichnet durch**
a) Bereitstellen eines Mehls von stark proteinhaltigen Pflanzensamen und/oder von Pulvern mit einem Gehalt an Proteinisolaten derartiger Pflanzensamen;
b) Durchführen einer Vernetzung von Eiweiß- und/oder Kohlenhydrat-Bestandteilen unter Erwärmen des Produkts;
c) Abkühlen des Gemisches auf eine Temperatur unter 50 ° C; und
d) Zugeben eines Verdickungsmittels.

2. Verfahren nach Anspruch 1, **dadurch gekennzeichnet, dass** man in Stufe b) zur Durchführung der Vernetzung ein Enzym, das eine Vernetzung bewirkt, zusetzt, das erhaltene Gemisch auf eine Temperatur in der Nähe des Temperaturoptimums des Enzyms für eine Zeitspanne, die eine Vernetzung der enthaltenen Proteine bewirkt, erwärmt, anschließend das zugesetzte Enzym durch Erwärmen des Gemisches auf eine Temperatur im Bereich von 55-75 °C inaktiviert.

3. Verfahren nach Anspruch 2, **dadurch gekennzeichnet, dass** man als Enzym Transglutaminase verwendet.

4. Verfahren nach Anspruch 3, **dadurch gekennzeichnet, dass** die Transglutaminase eine Aktivität von 50-150 U/g aufweist.

5. Verfahren nach Anspruch 1, **dadurch gekennzeichnet, dass** man in Stufe b) zur Durchführung der Vernetzung eine Erwärmung auf 80-90 °C für eine Zeitspanne von 10-30 Minuten durchführt.

6. Verfahren nach einem der Ansprüche 1 bis 5, **dadurch gekennzeichnet, dass** man als Mehl Lupinenmehl verwendet.

7. Verfahren nach einem der Ansprüche 1 bis 6, dass man dem Reaktionsgemisch eine Kohlenhydratquelle und/oder ein Speiseöl zusetzt.

8. Verfahren nach einem der Ansprüche 1 bis 7, **dadurch gekennzeichnet, dass** man dem Reaktionsgemisch eine Hefe zusetzt, die ernährungsphysiologisch wichtige Spurenelemente und/oder Vitamine enthält.

9. Verfahren nach Anspruch 1, **dadurch gekennzeichnet, dass** man in Stufe d) als Verdickungsmittel Xanthan, Johannisbrotkernmehl oder Gellan verwendet.
